(19) Europäisches Patentamt European Patent Office Office européen des brevets

(11) **EP 4 501 662 A1**

(12) **EUROPEAN PATENT APPLICATION**
published in accordance with Art. 153(4) EPC

(43) Date of publication:
**05.02.2025 Bulletin 2025/06**

(21) Application number: **22932505.5**

(22) Date of filing: **25.03.2022**

(51) International Patent Classification (IPC):
**B60C 7/00** (2006.01)

(52) Cooperative Patent Classification (CPC):
**B60C 7/00**

(86) International application number:
**PCT/JP2022/014629**

(87) International publication number:
**WO 2023/181401 (28.09.2023 Gazette 2023/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: NISSAN MOTOR CO., LTD.
**Kanagawa 221-0023 (JP)**

(72) Inventors:
• SUZUKI, Takuma
**Atsugi-shi, Kanagawa 243-0123 (JP)**
• SASAKI, Kensuke
**Atsugi-shi, Kanagawa 243-0123 (JP)**
• OKANO, Toshihiko
**Atsugi-shi, Kanagawa 243-0123 (JP)**

(74) Representative: **Osha BWB**
**2, rue de la Paix**
**75002 Paris (FR)**

(54) **AIRLESS TIRE**

(57) An airless tire is provided, comprising: a plurality of spokes (12) having elasticity and provided radially from an outer circumferential side of a wheel (11) coupled to a vehicle toward an inner circumferential side of a tread (15) that comes into contact with a road surface; and an intermediate ring (13) having elasticity and provided to connect to the plurality of spokes (12) between the wheel (11) and the tread (15). Each of the spokes (12) has a bent portion (16) between an end portion (12a) on the wheel side and an end portion (12b) on the tread side. The bent portion (16) bends with respect to a direction connecting these end portions. The intermediate ring (13) is connected to the bent portion (16).

FIG. 1

EP 4 501 662 A1

**Description**

[Technical Field]

The present invention relates to an airless tire (also referred to as a non-pneumatic tire).

[Background Art]

As an example of airless tires that do not use air, a non-pneumatic pressure tire is known, in which a support structure for supporting the load from a vehicle includes an inner annular portion, an intermediate annular portion provided concentrically on the outer side of the inner annular portion, an outer annular portion provided concentrically on the outer side of the intermediate annular portion, a plurality of inner connection portions that connect the inner annular portion and the intermediate annular portion, and a plurality of outer connection portions that connect the outer annular portion and the intermediate annular portion (Patent Document 1). In this conventional technique, the intermediate annular portion is interposed between the pluralities of connection portions connecting the inner annular portion and the outer annular portion, and it is therefore said that rigidity fluctuation due to the positional relationship between the spoke position and the center position of the ground contact area is unlikely to occur.

[Prior Art Documents]

[Patent Documents]

[Patent Document 1] JP2009-35050A

[Summary of Invention]

[Problems to be solved by Invention]

In the above-described conventional technique, if the outer annular portion could be composed of a rigid body, the contracted amount of the connection portions (spokes) near the ground in response to the wheel load would be the same as the extended amount of the connection portions (spokes) on the opposite side of the tire at the top. The outer annular portion, however, cannot be composed of a rigid body because it is necessary to ensure a ground contact length for generating the lateral force on the tire when steering and to absorb small irregularities on the road surface. Thus, even in the above-described conventional technique tires, the structure is such that a large wheel load acts on the connection portions (spokes) near the ground contact, leading to a problem of poor durability of the connection portions (spokes).
A problem to be solved by the present invention is to provide an airless tire capable of distributing the load acting on the tire.

[Means for solving problems]

The present invention solves the above problem in an airless tire comprising a plurality of spokes having elasticity and provided radially from an outer circumferential side of a wheel toward an inner circumferential side of a tread and an intermediate ring having elasticity and provided to connect to the plurality of spokes between the wheel and the tread, through providing, between an end portion on the wheel side and an end portion of the tread side of each spoke, a bent portion that bends with respect to a direction connecting these end portions and connecting the intermediate ring to the bent portion.

[Effect of Invention]

According to the present invention, the load acting on the tire is input to the spokes, but the load acting on the bent portion of each spoke is transmitted in the circumferential direction of the tire by the intermediate ring. This can distribute the load acting on the tire.

[Brief Description of Drawings]

FIG. 1 is a front view illustrating the basic structure of an airless tire according to one or more embodiments of the present invention.

FIG. 2A is a perspective view illustrating the rim of the wheel of FIG. 1.

FIG. 2B is an exploded perspective view illustrating the rim of the wheel of FIG. 2A.

FIG. 3 is a perspective view illustrating an airless tire according to a first embodiment of the present invention.

FIG. 4 is a front view illustrating the airless tire according to the first embodiment of FIG. 3.

FIG. 5 is an enlarged front view illustrating part V of FIG. 4.

FIG. 6 is a graph illustrating the axial force acting on intermediate rings of the airless tire illustrated in FIG. 5 for each position of the intermediate rings.

FIG. 7 is a graph illustrating the share ratio of a vertical load transmitted from the spokes of the airless tire to the wheel according to the first embodiment for each angle of the tire.

FIG. 8A is an enlarged front view illustrating a comparative example of the first embodiment.

FIG. 8B is a graph illustrating the share ratio of a vertical load transmitted from the spokes of the airless tire to the wheel according to the comparative example of FIG. 8A for each angle of the tire.

FIG. 9 is a perspective view illustrating an airless tire according to a second embodiment of the present invention.

FIG. 10 is a front view illustrating the airless tire according to the second embodiment of FIG. 9.

FIG. 11 is an enlarged front view illustrating part XI of FIG. 10.

FIG. 12 is an enlarged front view illustrating an airless tire according to another embodiment of the present invention.

FIG. 13 is an enlarged front view illustrating an airless tire according to still another embodiment of the present invention.

FIG. 14 is an enlarged front view illustrating an airless tire according to yet another embodiment of the present invention.

FIG. 15 is an enlarged front view illustrating an airless tire according to still yet another embodiment of the present invention.

FIG. 16 is an enlarged front view illustrating an airless tire according to yet still another embodiment of the present invention.

[Mode(s) for Carrying out the Invention]

Hereinafter, one or more exemplary modes for carrying out the present invention will be described with reference to the drawings. The airless tires according to the embodiments of the present invention described below can be applied not only to wheels of four-wheeled automobiles, two-wheeled automobiles, industrial vehicles, bicycles, and other vehicles, but also to wheels of carts, etc.

«Basic structure of airless tire»

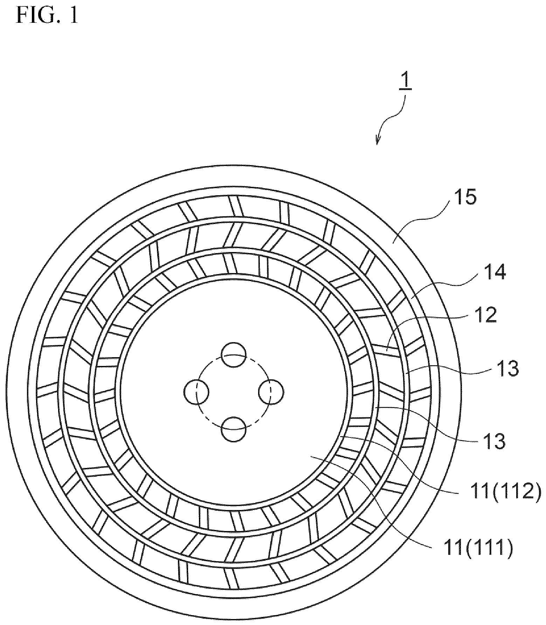

FIG. 1 is a front view illustrating the basic structure of an airless tire 1 according to an embodiment of the present invention. With reference to FIG. 1, the structure common to the first and second embodiments to be described later will be described first. As illustrated in FIG. 1, the airless tire 1 of the present embodiment includes a wheel 11, spokes 12, one or more intermediate rings 13, an outer ring 14, and a tread 15.

The wheel 11 is fixed to a hub of the vehicle (not illustrated). The wheel 11 is configured to include, for example, a disk-shaped disk 111 and a cylindrical rim 112, and is composed of metal or other highly rigid material. In the front view of FIG. 1, what is illustrated as a circular member in the central portion of the airless tire 1 is the disk 111 of the wheel 11, and this disk 111 is fixed to the hub of the vehicle thereby to support the airless tire 1 on the axle shaft.

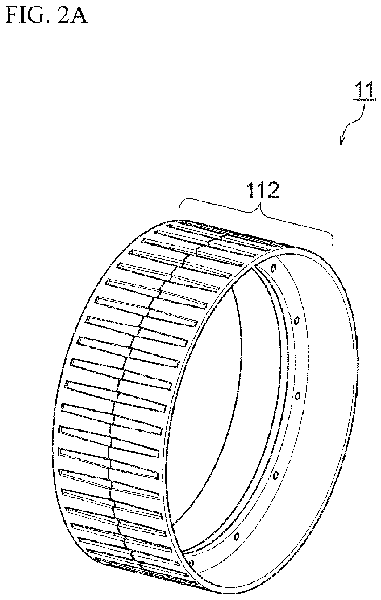

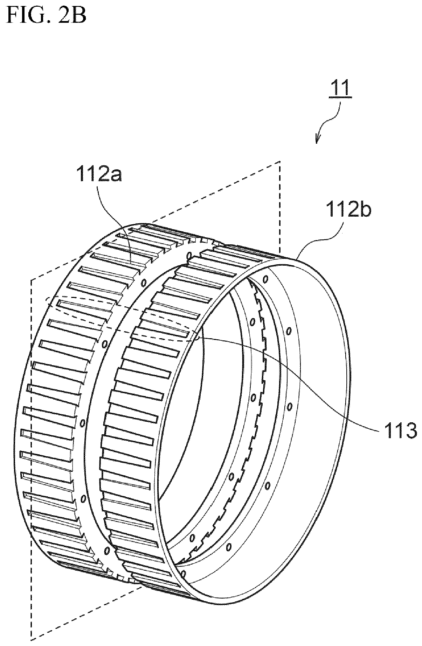

FIG. 2A is a perspective view illustrating the rim 112 of the wheel 11 of FIG. 1, and FIG. 2B is an exploded perspective view of the rim 112. To facilitate understanding, in FIG. 2A and FIG. 2B, illustration of the disk 111 of the wheel 11 connected to the hub of the vehicle is omitted, and only the rim 112 of the wheel 11 to which the spokes 12 are fitted is illustrated. In the present embodiment, the rim 112 of the wheel 11 is structured to be divided into two members 112a and 112b in the width direction of the tire. The outer circumferential surface of the rim 112 is formed with a plurality of grooves 113, and the inner end portions of the spokes 12 are fitted in respective grooves 113. The grooves 113 are provided approximately evenly along the circumferential direction of the outer circumferential surface of the rim 112, and have an anchor-shaped cross section. When the spokes 12 are attached to the rim 112, the following procedure is carried out that includes obtaining a state in which the rim 112 is disassembled into the two members 112a and 112b as illustrated in FIG. 2B, inserting into the grooves 113 the inner end portions of the spokes 12 having a cross section conforming to the anchor shape, interposing the inner end portions of the spokes 12 between the two members 112a and 112b, and combining the two members 112a and 112b using one or more fastening member such as bolts. This allows the plurality of spokes 12 to be constrained to the wheel 11 in both the radial direction and the circumferential direction.

The means for attaching the spokes 12 to the wheel 11 is not limited to this example, provided that the robustness can be ensured. For example, the outer circumferential surface of the rim 112 of the wheel 11 and the inner end portions of the spokes 12 may be bonded using an adhesive. Alternatively, the outer circumferential surface of the rim 112 of the wheel 11 may not be provided with the grooves 113, and the outer circumferential surface of the rim 112 of the wheel 11 and the inner end portions of the spokes 12 may be directly connected to each other using bolts. Alternatively, an annular inner ring may be provided to connect the inner end portions of the plurality of spokes 12, and this inner ring may be bonded to the outer circumferential surface of the rim 112 of the wheel 11 using an adhesive. In this case, the inner surface of the inner ring may be provided with protrusions that fit into the grooves 113 formed on the rim 112 of the wheel 11, and the inner ring and the wheel 11 may be structured such that they are fitted with each other.

The tread 15 is formed in a cylindrical shape and is provided on the outermost circumference of the airless tire 1. The tread 15 is composed of a composite material in which an elastic material such as natural rubber or synthetic rubber is reinforced with a tire cord made of metal or resin. The outer circumferential surface of the tread 15 is formed with a tread pattern in the same manner as in conventional pneumatic tires, and serves as the contact surface with the road surface.

The outer ring 14 is a cylindrical member that connects the tread side end portions of the plurality of spokes 12, and is fastened to the inner surface of the above-described tread 15 by means of an adhesive or the like. The outer ring 14 is composed of an elastic material such as a thermoplastic resin having elasticity or a thermosetting resin having elasticity, and may be molded integrally with the spokes 12. In the airless tire 1 of the present invention, the outer ring 14 is not an essential component, and the tread side end portions of the spokes 12 may be directly fastened to the tread 15 thereby to omit the outer ring 14.

The above is the basic structure of the airless tire 1 according to one or more embodiments of the present invention, and the following description will be made for the embodiments of the configuration of the spokes 12 and intermediate rings 13 provided between the wheel 11 and the tread 15.

«First embodiment»

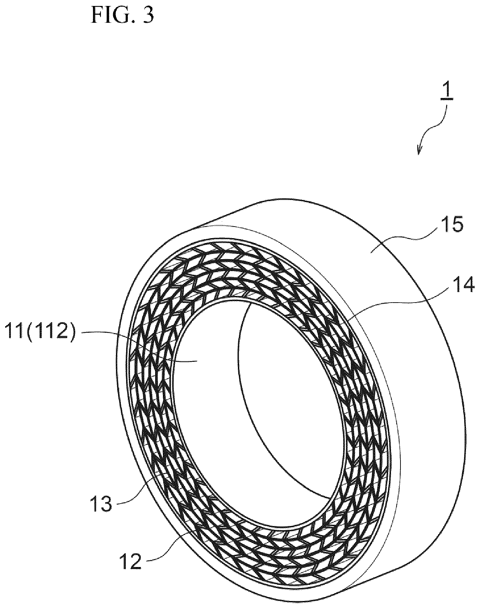

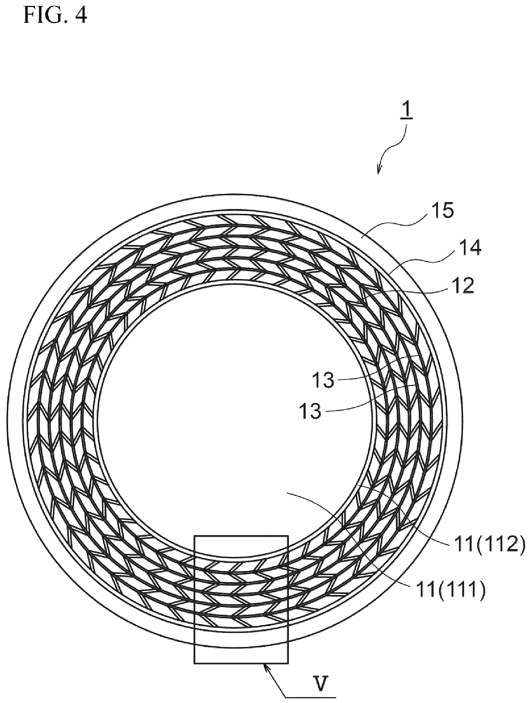

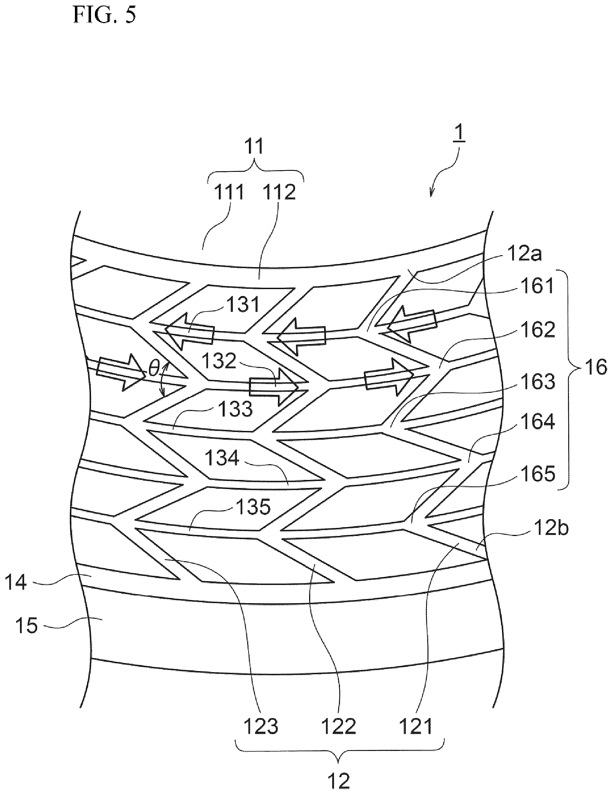

FIG. 3 is a perspective view illustrating an airless tire 1 according to a first embodiment of the present invention, FIG. 4 is a front view illustrating the airless tire 1 according to the first embodiment of FIG. 3, and FIG. 5 is an enlarged front view illustrating part V of FIG. 4. The spokes 12 in the present embodiment are composed of an elastic material such as a thermoplastic resin having elasticity or a thermosetting resin having elasticity, and a plurality of the spokes 12 are provided to extend radially from the outer circumferential side of the wheel 11 toward the inner circumferential side of the tread 15 at equal intervals along the circumferential direction of the tire. The plurality of spokes 12 are provided axisymmetrically with respect to the center axis of the tire. In the enlarged front view of FIG. 5, three spokes 121, 122, and 123 are illustrated from right to left. The number of spokes 12 provided in one airless tire 1 is not particularly limited, and can be set appropriately according to the ground contact length of the tire, the load resistance of the spokes 12, the vibration resistance, and other required specifications of the tire.

As illustrated with the reference symbols 12a and 12b on the rightmost spoke 121 in FIG. 5, one spoke 12 is formed with bent portions 16 between the wheel side end portion 12a and the tread side end portion 12b. The bent portions 16 are bent with respect to the direction connecting these two end portions 12a and 12b. This spoke 12 is formed in a zigzag shape when viewed in the direction of the tire's rotation axis (front views of FIGS. 4 and 5). Regarding the rightmost spoke 121 of FIG. 5, it is formed with five bent portions 161, 162, 163, 164, and 165 from the wheel side end portion 12a toward the tread side end portion 12b. Note that the reference numerals for the bent portions 16 are only given to those of the rightmost spoke 121 of FIG. 5, but bent portions 16 having the same configuration are formed on respective spokes 12 all around the tire.

If the bent portions 16 of a spoke 12 have an extremely small degree of bending, the spoke 12 will buckle and deform between the bent portions, and the amount of deformation in the circumferential direction of the tire cannot be restricted. Accordingly, although not particularly limited, it is desirable to set a minor angle $\theta$ of the bent portions 16 illustrated in FIG. 5 to less than 120°.

Each of the intermediate rings 13 of the present embodiment is composed of an elastic material such as a thermoplastic resin having elasticity or a thermosetting resin having elasticity, like the spokes 12, and is provided to connect to the plurality of spokes 12 between the wheel 11 and the tread 15. The intermediate rings 13 have a cylindrical shape concentric with the wheel 11 and the tread 15. In the front view illustrating the basic configuration of FIG. 1, two intermediate rings 13 are provided, but in the airless tire 1 of the first embodiment illustrated in FIGS. 3 to 5, five intermediate rings 13 are provided. The number of intermediate rings 13 provided in one airless tire 1 is not particularly limited, but by setting the number of intermediate rings 13 to two, four, six, or other even number, the balance of force in the circumferential direction of the tire is maintained. Thus, the axial force (compressive force and tensile force) acting on the intermediate rings 13 becomes continuous around the tire, and the load acting on the bent portions 16 of the spokes 12 can be distributed throughout the entire tire. As a result, an effect of reducing the rolling resistance coefficient (RRC) can be obtained.

As illustrated in FIGS. 3 and 4, one intermediate ring 13 is provided in an annular shape between the wheel 11 and the tread 15 and therefore intersects with the plurality of spokes 12. In the airless tire 1 of the present embodiment, each intermediate ring 13 is connected to each spoke 12 at each bent portion 16. That is, as illustrated in the enlarged front view of FIG. 5, the intermediate ring 131 provided on the innermost side is connected to the bent portion 161 on the innermost side of each spoke 121, 122, 123, the intermediate ring 132 on the next inner side is connected to the bent portion 162 on the next inner side of each spoke 121, 122, 123, and the intermediate ring 135 provided on the outermost side is connected to the bent portion 165 on the outermost side of each spoke 121, 122, 123.

In the airless tire 1 of the present embodiment, the bent portions 16 of the spokes 12 connected to the same intermediate ring 13 are formed so as to bend in the same direction with respect to the circumferential direction of the tire. That is, as illustrated in the enlarged front view of FIG. 5, when looking at the intermediate ring 131 provided on the innermost side, the bending directions of the bent portions 161 of the three spokes 121, 122, and 123 connected to the intermediate ring 131 are all convex to the left in FIG. 5. Likewise, when looking at the intermediate ring 132 provided next on the inner side, the bending directions of the bent portions 162 of the three spokes 121, 122, and 123 connected to the intermediate ring 132 are all convex to the right in FIG. 5.

As in the present embodiment, when the bent portions 16 of the spokes 12 connected to the same intermediate ring 13 are formed so as to bend in the same direction with respect to the circumferential direction of the tire (i.e., the zigzags of the spokes 12 are set in phase), the deformation directions of the bent portions 16 of the spokes 12 in the circumferential direction are the same for adjacent spokes 12. When looking at the intermediate ring 131 provided on the innermost side as illustrated in FIG. 5, the bending directions of the bent portions 161 of the three spokes 121, 122, and 123 connected to the intermediate ring 131 all point to the left as illustrated by the arrows in FIG. 5, and when looking at the intermediate ring 132 provided next on the inner side, the bending directions of the bent portions 162 of the three spokes 121, 122, and 123 connected to the intermediate ring 132 all point to the right as illustrated by the arrows in FIG. 5. Therefore the axial force (compressive force and tensile force) acting on the intermediate rings 13 becomes continuous around the tire, and the load acting on the bent portions 16 of the spokes 12 can be distributed throughout the entire tire. As a result, an effect of reducing the rolling resistance coefficient can be obtained.

The action will then be described.

When a wheel load (vehicle weight) acts on the airless tire 1 of the present embodiment, each of the spokes 12 near the road surface bends at its bent portions 16 to thereby allow the spokes 12 to deform in the radial direction of the tire. At this time, the bent portions 16 deform in the circumferential direction of the tire as illustrated by the arrows in FIG. 5, so that the vertical load (wheel load) acting on the tire is propagated in the circumferential direction, and the load can be distributed throughout the tire.

In addition, in the airless tire 1 of the present embodiment, when the spokes 12 near the road surface are compressed and deformed in the radial direction of the tire, as illustrated by the arrows in FIG. 5, the intermediate rings 131, 133, and 135 propagate the load in the clockwise direction while the intermediate rings 132 and 134 propagate the load in the counterclockwise direction. In this way, all of the intermediate rings 13 do not propagate the load in the same rotational direction, but rather cancel out the forces in the rotational direction, and the tire deformation can therefore be made uniform overall. By making the number of intermediate rings 13 an even number as described above, the forces in the rotational direction are canceled out even further. The reason of providing the spokes with the bent portions 16 is to allow some of the spokes 12 to move in the circumferential direction of the tire in response to the deformation of the spokes 12 in the radial direction of the tire.

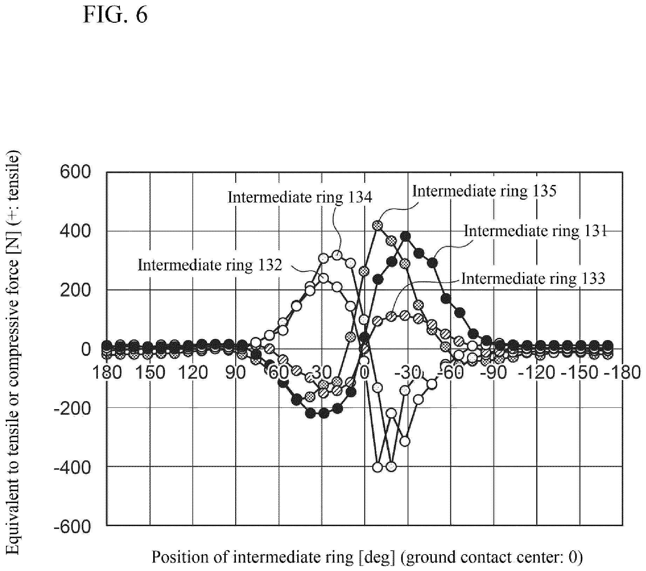

FIG. 6 is a graph illustrating the results of calculating the axial force acting on each of the intermediate rings 131 to 135 of the airless tire 1 illustrated in FIGS. 3 to 5 (the tensile or compressive force acting on an intermediate ring (here, each beam) connecting the bent portions 16 of spokes 12) for each position of the intermediate rings 131 to 135. The intermediate ring position [deg] on the horizontal axis is expressed with the ground contact center point at 0° and directly above the tire at 180°. The axial force [N] on the vertical axis is expressed with the tensile force acting on each intermediate ring as a positive (+) force and the compressive force as a negative (-) force.

In the airless tire 1 illustrated in FIGS. 3 to 5, it can be understood not only that the axial force acting on each of the five intermediate rings 131 to 135 is large in a range of +90° to -90°, but also that the axial force acting is a continuous value for the entire tire. From this, it is possible to confirm that the airless tire 1 illustrated in FIGS. 3 to 5 has an action of distributing the load over the entire tire. Although not illustrated, in the case of the first embodiment, the compressive force and the tensile force act alternately on the five intermediate rings 131 to 135, and it can thus be said that the load is not distributed over the entire tire as compared to the configuration of the second embodiment, which will be described later. That is, it can be said that there is an action of transmitting the deformation in the circumferential direction of the bent portions 16 of the spokes 12 near the ground contact to the upper portion of the tire as compared to the second embodiment.

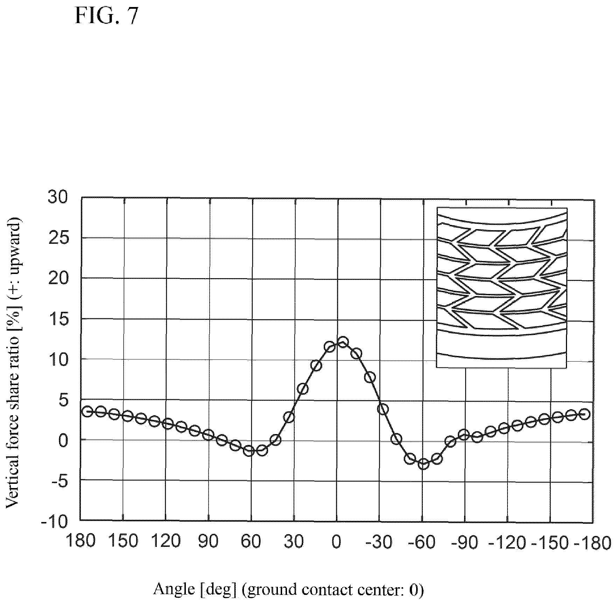

The action and effect of the airless tire 1 according to the first embodiment will then be described in comparison with a comparative example. FIG. 7 is a graph illustrating the share ratio (Z direction) of a vertical load Pz transmitted from the spokes 12 of the airless tire 1 to the wheel 11 according to the first embodiment illustrated in FIGS. 3 to 5 for each angle [deg] of the tire. The tire angle [deg] on the horizontal axis is expressed with the ground contact center point at 0° and directly above the tire at 180°. The vertical share ratio on the vertical axis is expressed as a normalized value obtained by dividing the vertical load Pz (Z direction) shared by each angle range by the wheel load. As illustrated in FIG. 7, in the airless tire 1 illustrated in FIGS. 3 to 5, it can be understood that the vertical share ratio in the vicinity of 0° of the ground contact center point is continuously a large value while the vertical share ratio in the vicinity of ±180° directly above the tire of the ground contact center point also shares about 5% of the load.

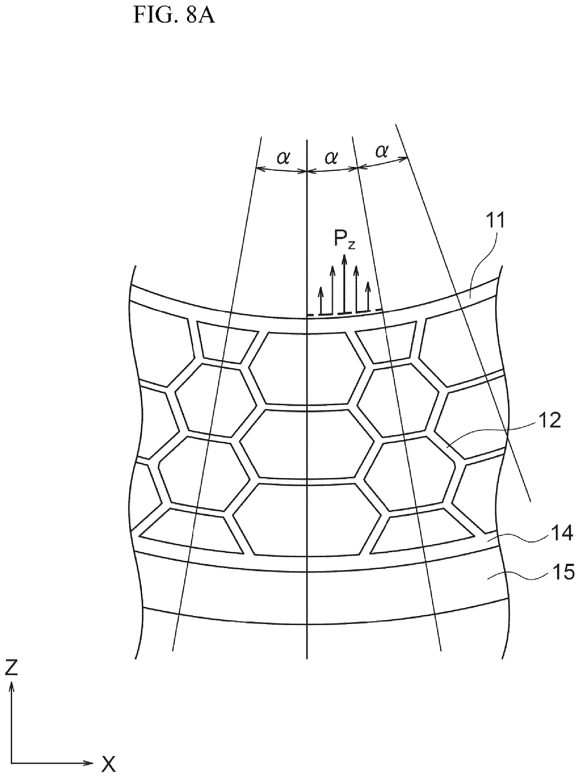

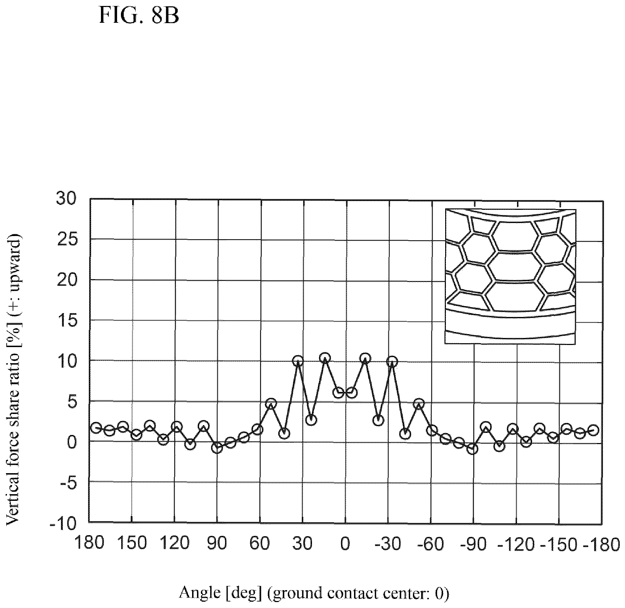

In contrast, FIG. 8A is a front view (enlarged front view corresponding to FIG. 5) illustrating an airless tire as a comparative example of the airless tire 1 according to the first embodiment, and illustrates an example in which a honeycomb structure is adopted in the so-called spoke portion. FIG. 8B is a graph illustrating the share ratio (Z direction) of a vertical load Pz transmitted from the spokes 12 of the airless tire 1 to the wheel 11 according to the comparative embodiment illustrated in FIG. 8A for each angle $\alpha$ [deg] of the tire. As with the graph of FIG. 7, the tire angle $\alpha$ [deg] on the horizontal axis is expressed with the ground contact center point at 0° and directly above the tire at 180°. The vertical share ratio on the vertical axis is expressed as a normalized value obtained by dividing the vertical load Pz (Z direction) shared by each angle range by the wheel load. As illustrated in FIG. 8B, in the airless tire 1 according to the comparative example, it can be understood that the vertical share ratio in the vicinity of 0° of the ground contact center point is high while the vertical share ratio in the vicinity of ±180° directly above the tire of the ground contact center point can only share about 1% of the load. It can also be understood that the waveform of the vertical share ratio follows discrete values throughout.

Another effect of the airless tire 1 according to the present embodiment, the rolling resistance of the tire, will now be described. The rolling resistance coefficient (RRC) of the tire can be considered with the following equations. [Mathematical Formula 1]

$$RRC = EN_t/(L_t F_z) \qquad \dots \text{(Equation 1)}$$

[Mathematical Formula 2]

$$EN_t = \int S_i \tan \delta_i V_i \qquad \dots \text{(Equation 2)}$$

In the above Equations 1 and 2, $EN_t$ represents the loss energy of the tire, $L_t$ represents the effective outer circumferential length or the tire, $F_z$ represents the wheel load, $S_i$ represents the strain energy of each site, $\tan \delta_i$ represents the loss coefficient of the material, and $V_i$ represents the volume of each site. The loss energy $EN_t$ of the entire tire can be derived through modeling the structure of the airless tire 1 according to the present embodiment, performing a structural analysis, deriving the strain energy $S_i$ of each site of the tire, and obtaining the product of $\tan \delta_i$ and volume of the material, and the $RRC$ can be calculated accordingly. As a result of applying this method to the results of the structural analysis to calculate the rolling resistance coefficient $RRC$ of the tire, it has been confirmed that the rolling resistance coefficient $RRC$ of the airless tire 1 according to the first embodiment illustrated in FIGS. 3 to 5 is 48% of the rolling resistance coefficient $RRC$ of the airless tire according to the comparative example having the honeycomb shape illustrated in FIG. 8A.

The strain energy $S_i$ in the above Equation 2 can also be considered with the following equation. [Mathematical Formula 3]

$$S_i = \sigma_i^2/(2E_i) \qquad \dots \text{(Equation 3)}$$

In the above Equation 3, $\sigma_i$ represents the stress of each portion, and $E_i$ represents the longitudinal elastic modulus of the material of each portion. As apparent from the above Equation 3, the strain energy $S_i$ is proportional to the square of the stress $\sigma_i$ of each portion, and a reduction in the stress therefore contributes greatly to the strain energy, which also leads to a reduction in the rolling resistance coefficient $RRC$ in the above Equations 1 and 2. From the share ratio of the vertical load illustrated in FIGS. 7 and 8B, it can be understood that the less the load is concentrated near the ground contact center point, the more the stress near the ground contact center point can be reduced, and this can explain the effect of reducing the rolling resistance coefficient $RRC$ according to the present invention.

«Second embodiment»

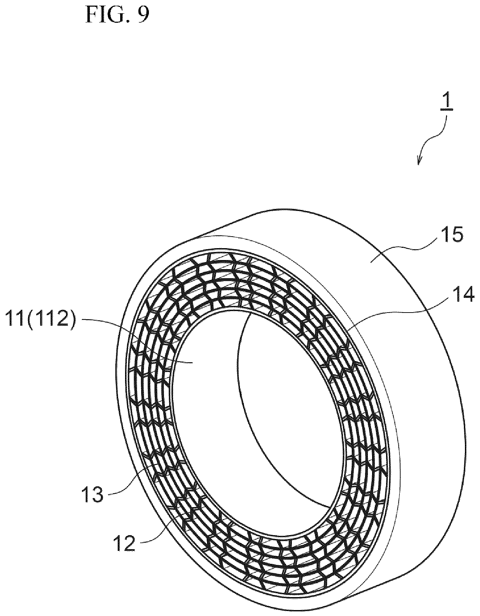

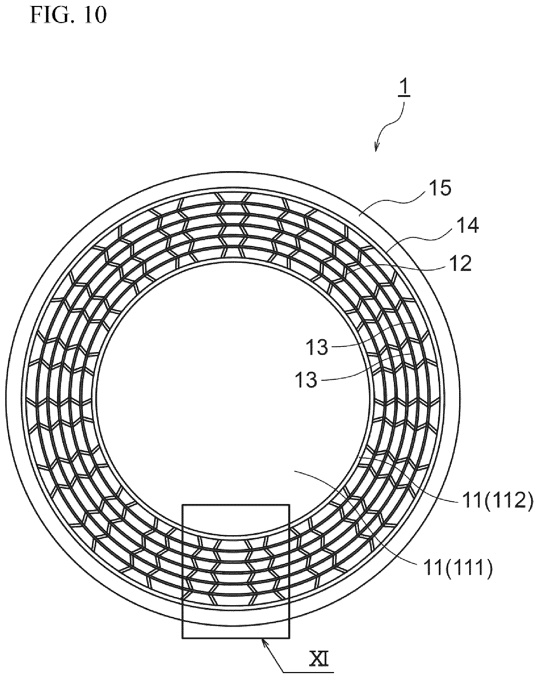

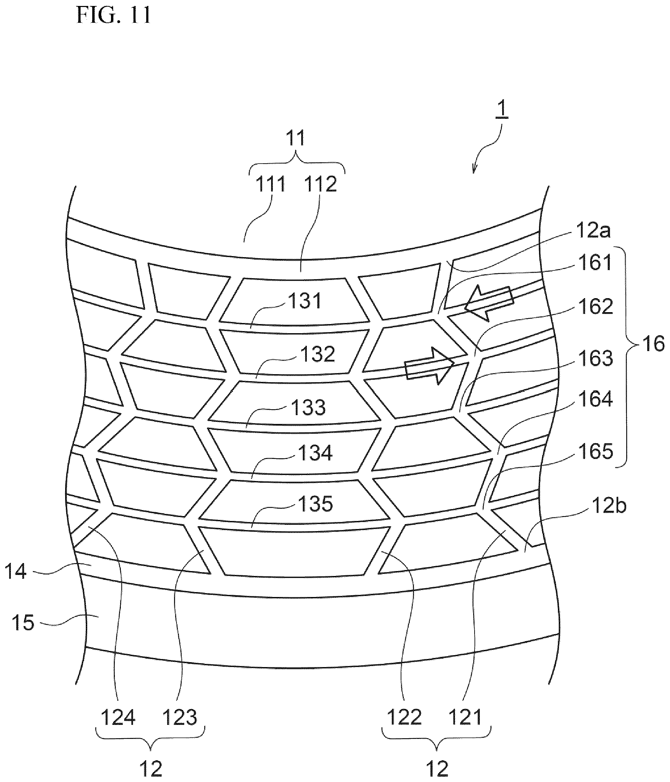

FIG. 9 is a perspective view illustrating an airless tire 1 according to a second embodiment of the present invention, FIG. 10 is a front view illustrating the airless tire 1 according to the second embodiment of FIG. 9, and FIG. 11 is an enlarged front view illustrating part XI of FIG. 10. The airless tire 1 of the present embodiment differs from the configuration of the above-described first embodiment in that the bent portions 16 and 16 of two spokes 12 and 12 adjacent in the circumferential direction of the tire, which are connected to the same intermediate ring 13, are formed so as to bend in the opposite directions with respect to the circumferential direction of the tire. Other configurations are common to the first embodiment, so the description thereof will be borrowed herein.

In the airless tire 1 of the first embodiment illustrated in FIG. 5, when looking at the intermediate ring 131 provided on the innermost side, the bending directions of the bent portions 161 of the three spokes 121, 122, and 123 connected to the intermediate ring 131 are all convex to the left in FIG. 5. Likewise, when looking at the intermediate ring 132 provided next on the inner side, the bending directions of the bent portions 162 of the three spokes 121, 122, and 123 connected to the intermediate ring 132 are all convex to the right in FIG. 5.

In contrast, in the airless tire 1 of the present embodiment, as illustrated in FIGS. 9 to 11, two adjacent spokes (e.g., spokes 121 and 122 or spokes 123 and 124 in FIG. 11) are made into a pair of spokes, and this pair of spokes 12 and 12 is arranged at equal intervals around the entire circumference of the tire. In the airless tire 1 of the present embodiment, as illustrated in FIG. 11, when looking at the intermediate ring 131 provided on the innermost side, the bending directions of the bent portions 161 of the spokes 121 and 123 among the bent portions 161 of the four spokes 121, 122, 123, and 124 connected to that intermediate ring 131 are convex to the left in FIG. 11, while the bending directions of the bent portions 161 of the spokes 122 and 124 are convex to the right in FIG. 11. Likewise, when looking at the intermediate ring 132 provided next on the inner side, the bending directions of the bent portions 162 of the spokes 121 and 123 among the bent portions 162 of the four spokes 121, 122, 123 and 124 connected to that intermediate ring 132 are convex to the right in FIG. 11, while the bending directions of the bent portions 162 of the spokes 122 and 124 are convex to the left in FIG. 11.

As in the present embodiment, provided that the bent portions 16 of the spokes 12 connected to the same intermediate ring 13 are formed so as to bend in the opposite directions with respect to the circumferential direction of the tire (i.e., the zigzags of the spokes 12 are set to different phases), when the wheel load (vehicle weight) acts on the tire, in addition to the distribution effect due to the propagation of the load by the intermediate rings 13, an additional effect can be obtained that the radial rigidity of the spokes 12 near the ground contact center point is increased. As a result, the thickness of the spokes 12 and the thickness of the intermediate rings 13 can be reduced, and weight saving of the tire can be achieved.

«Other embodiments»

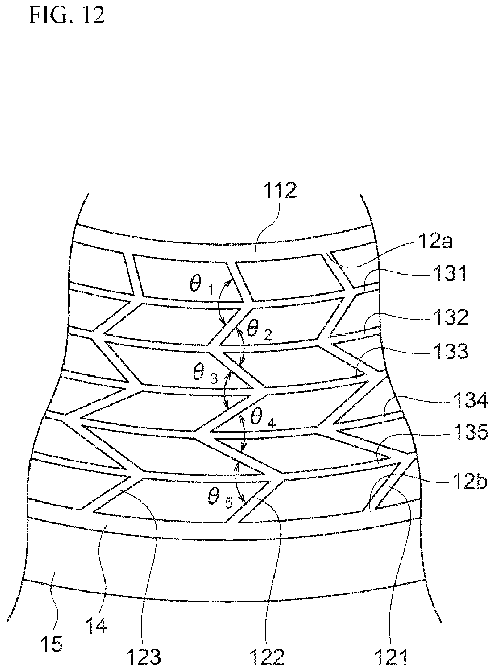

FIG. 12 is an enlarged front view of an airless tire according to another embodiment of the present invention, and illustrates an enlarged front view corresponding to FIG. 5 when viewed from the entire tire. In the airless tire 1 of the present embodiment, one spoke 12 is formed with a plurality of bent portions 16, and each of the bent portions 16 has a minor angle $\theta$ that is formed to decrease from an end portion 12a on the wheel side to an end portion 12b on the tread side (some of the bent portions 16 may have the same angle). That is, as illustrated in FIG. 12, when the minor angles $\theta$ of the plurality of bent portions 16 formed on one spoke 122 are $\theta 1$, $\theta 2$, $\theta 3$, $\theta 4$, and $\theta 5$ from the end portion 12a on the wheel side to the end portion 12b on the tread side, these angles are set to establish the relationship $\theta 1 \geq \theta 2 \geq \theta 3 \geq \theta 4 \geq \theta 5$. The smaller the minor angle $\theta$ of the bent portion 16, the easier the structure is to bend under the same load, so in the airless tire 1 of the present embodiment, the structure is obtained in which the bent portions 16 on the outer circumferential side are more likely to bend.

When the spokes 12 near the ground contact center point are compressed and deformed in the radial direction, the spokes 12 deform in the circumferential direction at the bent portions 16 as illustrated in FIG. 5, and the intermediate rings 13 transmit the load in the circumferential direction. At that time, the airless tire 1 of the present embodiment has a structure in which the bent portions 16 on the outer circumferential side are more likely to bend, and the amount of circumferential displacement is therefore greater in the intermediate ring 13 located on the outer circumferential side. As a result, the difference in the circumferential length is absorbed, and the force transmission by the inner intermediate ring 13 and the outer intermediate ring 13 can be made uniform.

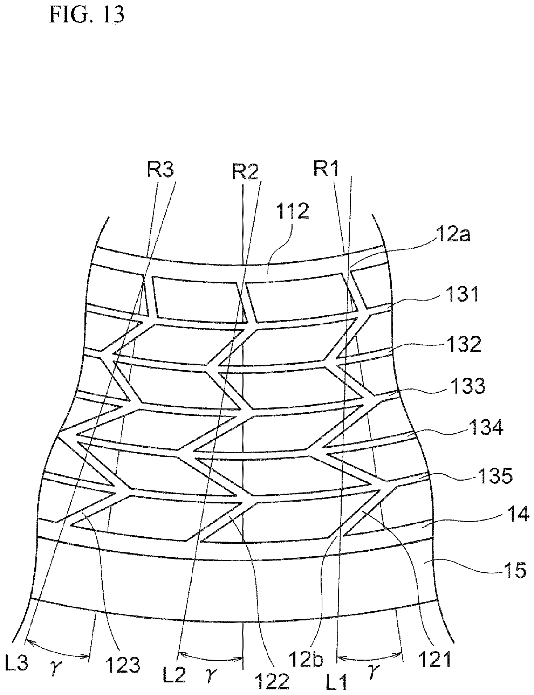

FIG. 13 is an enlarged front view of an airless tire according to still another embodiment of the present invention, and illustrates an enlarged front view corresponding to FIG. 5 when viewed from the entire tire. In the airless tire 1 of the present embodiment, the directions L1, L2, and L3 connecting the wheel side end portions 12a and tread side end portions 12b of the spokes 12 are provided to incline in the circumferential direction of the tire with respect to radial directions R1, R2, and R3 of the tire, respectively, by a predetermined angle $\gamma$ that exceeds 0.

In the airless tire 1 of the present embodiment configured in this way, when the spokes 12 near the ground contact center point are compressed and deformed in the radial direction, the spokes 12 generate a component of force also in the circumferential direction of the tire, that is, in the front-rear direction of the vehicle. Thus, as in the airless tire 1 of the present embodiment, by providing an angle $\gamma$ between the directions L1, L2, and L3 connecting the wheel side end portions 12a and tread side end portions 12b of the spokes 12 and the radial directions R1, R2, and R3 of the tire, it is possible to reduce the rolling resistance by the component of force in the circumferential direction of the tire (the front-rear direction of the vehicle) generated by the spokes 12 in a state in which the tire is rotating.

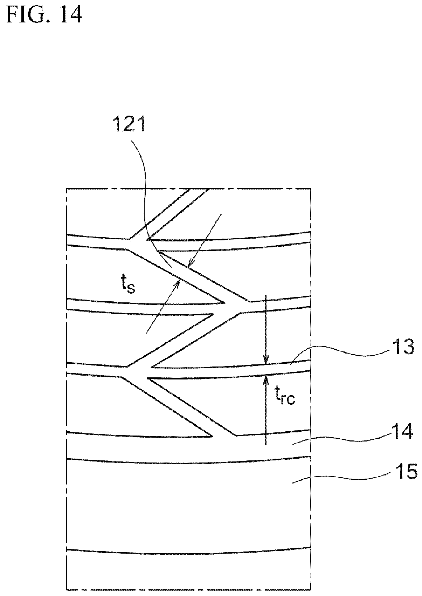

FIG. 14 is an enlarged front view of an airless tire according to yet another embodiment of the present invention, and is an enlarged front view corresponding to a part of FIG. 5 when viewed from the entire tire. In the airless tire 1 of the present embodiment, the bending rigidity of the spokes 12 is set to a value greater than the bending rigidity of the intermediate rings 13.

That is, when the longitudinal elastic modulus of the material of the spokes 12 is Es, the longitudinal elastic modulus of the material of the intermediate rings 13 is Ere, the thickness of the spokes 12 is ts, the thickness of the intermediate rings 13 is trc, the width of the spokes 12 in the tire width direction is ws, and the width of the intermediate rings 13 in the tire width direction is wrc, these values are set to satisfy $Es \cdot ts^3 \cdot ws \geq Erc \cdot trc^3 \cdot wrc$. If the bending rigidity of the spokes 12 is smaller than that of the intermediate rings 13, the amount of deformation in the vicinity of the ground contact center point will be large, but by setting the bending rigidity of the spokes 12 to a value greater than that of the intermediate rings 13 as in the airless tire 1 of the present embodiment, the action of supporting the wheel load by the spokes 12 is increased, and the load can be supported by the entire tire.

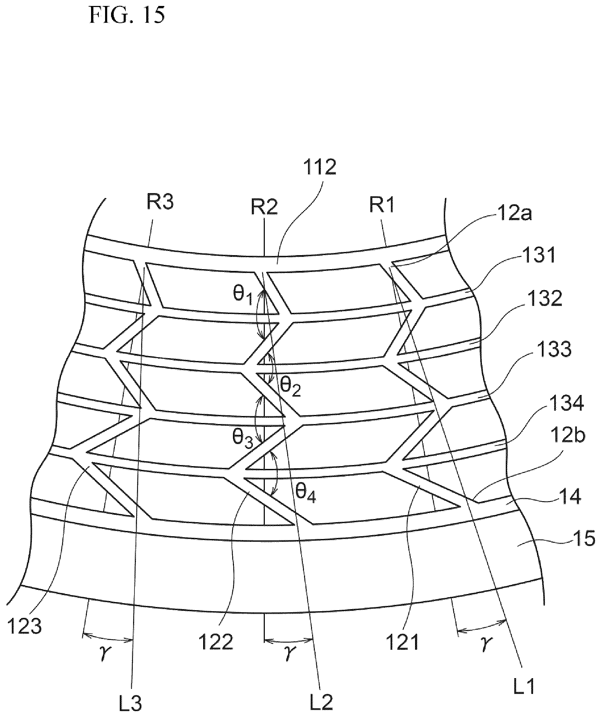

FIG. 15 is an enlarged front view of an airless tire according to still yet another embodiment of the present invention, and illustrates an enlarged front view corresponding to FIG. 5 when viewed from the entire tire. In the airless tire 1 of the present embodiment, an even number of intermediate rings 13, four, are provided. As described above, in the airless tire 1 of the present embodiment, when the spokes 12 near the road surface are compressed and deformed in the radial direction of the tire, as illustrated by the arrows in FIG. 5, the intermediate rings 131, 133, and 135 propagate the load in the clockwise direction while the intermediate rings 132 and 134 propagate the load in the counterclockwise direction. In this way, all of the intermediate rings 13 do not propagate the load in the same rotational direction, but rather cancel out the forces in the rotational direction, and the tire deformation can therefore be made uniform overall. By making the number of intermediate rings 13 an even number, the forces in the rotational direction are canceled out even further.

In the airless tire 1 according to the embodiment illustrated in FIG. 15, as in the first embodiment, the bent portions 16 of the spokes 12 connected to the same intermediate ring 13 are formed so as to bend in the same direction with respect to the circumferential direction of the tire, and as in the embodiment illustrated in FIG. 12, one spoke 12 is formed with a plurality of bent portions 16, each of which has a minor angle $\theta$ that is formed to decrease from an end portion 12a on the wheel side to an end portion 12b on the tread side. In addition, in the airless tire 1 according to the embodiment illustrated in FIG. 15, as in the embodiment illustrated in FIG. 13, the directions L1, L2, and L3 connecting the wheel side end portions 12a and tread side end portions 12b of the spokes 12 are provided to incline in the circumferential direction of the tire with respect to the radial directions R1, R2, and R3 of the tire, respectively, by a predetermined angle $\gamma$ that exceeds 0.

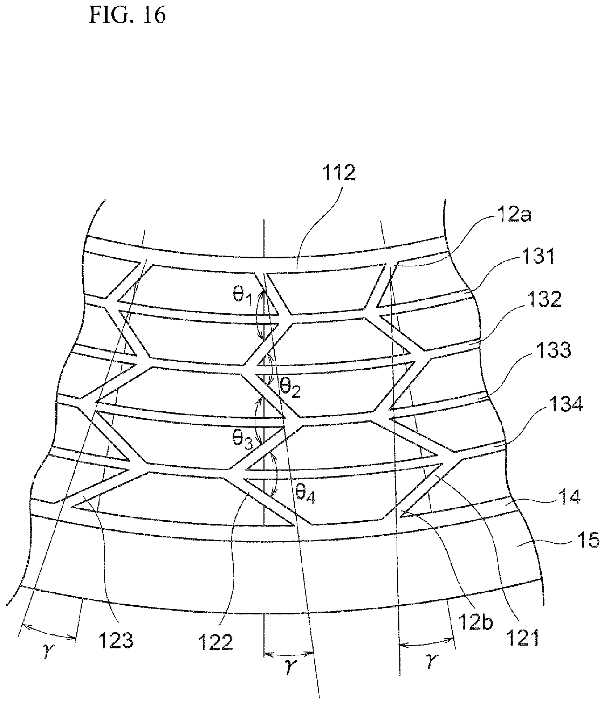

FIG. 16 is an enlarged front view of an airless tire according to yet still another embodiment of the present invention, and illustrates an enlarged front view corresponding to FIG. 5 when viewed from the entire tire. In the airless tire 1 according to the present embodiment, as in the second embodiment, the bent portions 16 of the spokes 12 connected to the same intermediate ring 13 are formed so as to bend in the opposite directions with respect to the circumferential direction of the tire, and an even number of intermediate rings 13, four, are provided. In addition, as in the embodiment illustrated in FIG. 12, one spoke 12 is formed with a plurality of bent portions 16, each of which has a minor angle $\theta$ that is formed to decrease from an end portion 12a on the wheel side to an end portion 12b on the tread side. Moreover, in the airless tire 1 according to the embodiment illustrated in FIG. 15, as in the embodiment illustrated in FIG. 13, the directions L1, L2, and L3 connecting the wheel side end portions 12a and tread side end portions 12b of the spokes 12 are provided to incline in the circumferential direction of the tire with respect to radial directions R1, R2, and R3 of the tire, respectively, by a predetermined angle $\gamma$ that exceeds 0.

As described above, according to the airless tire 1 of the present embodiments, the spokes 12 have bent portions 16, and the intermediate rings 13 are connected to the bent portions 16; therefore, the load acting on the bent portions 16 of the spokes 12 from the tire is transmitted in the circumferential direction of the tire by the intermediate rings 13, and the load acting on the tire can thus be distributed. As a result, the rolling resistance coefficient can be reduced.

Additionally or alternatively, according to the airless tire 1 of the present embodiments, the spokes 12 are formed in a zigzag shape when viewed in the direction of the rotation axis of the tire; therefore, the deformation mode at the bent portions 16 of the spokes 12 is clear. As a result, the load acting on the tire can be distributed even further.

Additionally or alternatively, according to the airless tire 1 of the present embodiment, the bent portions 16 of the spokes 12 connected to the same intermediate ring 13 are formed so as to bend in the same direction with respect to the circumferential direction of the tire; therefore, the directions of deformation of the bent portions 16 in the circumferential direction are the same as those of adjacent spokes 12. Through this configuration, the axial force (compressive force/tensile force) acting on the intermediate rings 13 becomes continuous over the entire circumference of the tire, and the load acting on the tire can thus be distributed even further.

Additionally or alternatively, according to the airless tire 1 of the present embodiment, the bent portions 16 of two spokes 12 adjacent in the circumferential direction of the tire and connected to the same intermediate ring 13 are formed so as to bend in opposite directions with respect to the circumferential direction of the tire; therefore, the rigidity of the spokes 12 near the ground contact center point increases apparently. This allows the spokes 12 and/or the intermediate rings 13 to be composed of less material, and the weight of the airless tire 1 can be reduced.

Additionally or alternatively, according to the airless tire 1 of the present embodiment, the bent portions 16 each have a minor angle $\theta$ that is formed to decrease from the end portion 12a on the wheel side to the end portion 12b on the tread side; therefore, the amount of deformation of the bent portions 16 in response to the radial deformation of the spokes 12 is larger on the outer circumferential side. This allows the acting force of the intermediate rings 13 to be uniform, and the load acting on the tire can be distributed even more.

Additionally or alternatively, according to the airless tire 1 of the present embodiment, the directions L1, L2, and L3 connecting the wheel side end portions 12a and tread side end portions 12b of the spokes 12 are provided to incline in the circumferential direction of the tire with respect to the radial directions R1, R2, and R3 of the tire, respectively, by a predetermined angle $\gamma$ that exceeds 0; therefore, the force can be generated in the front-rear direction of the vehicle when the tire rotates. This can reduce the rolling resistance of the airless tire 1.

Additionally or alternatively, according to the airless tire 1 of the present embodiment, the spokes 12 have a bending rigidity that is set to a value greater than that of the intermediate rings 13; therefore, the load acting on the tire can be distributed even more.

Additionally or alternatively, according to the airless tire 1 of the present embodiment, an even number of intermediate rings 13 are provided; therefore, the balance of force in the circumferential direction of the tire due to the intermediate rings 13 is maintained, and the load acting on the tire can be distributed even more.

[Description of Reference Numerals]

1       Airless tire

11      Wheel

111     Disk
112     Rim
113     Groove

12, 121 to 124      Spoke

12a     Wheel side end portion
12b     Tread side end portion

13, 131 to 135      Intermediate ring
14                  Outer ring
15                  Tread
16, 161 to 165      Bent portion

R1, R2, R3      Radial direction of tire
L1, L2, L3      Direction connecting between wheel side end portion and tread side end portion of spoke

**Claims**

1.  An airless tire comprising:

    a plurality of spokes having elasticity and provided radially from an outer circumferential side of a wheel coupled to a vehicle toward an inner circumferential side of a tread that comes into contact with a road surface; and
    an intermediate ring having elasticity and provided to connect to the plurality of spokes between the wheel and the tread,
    each of the spokes having a bent portion between an end portion on the wheel side and an end portion on the tread side, the bent portion bending with respect to a direction connecting these end portions,
    the intermediate ring being connected to the bent portion.

2.  The airless tire according to claim 1, wherein the spokes are formed in a zigzag shape when viewed in a direction of a rotation axis of the tire.

3.  The airless tire according to claim 1 or 2, wherein the intermediate ring comprises a plurality of intermediate rings, and bent portions of the spokes connected to a same intermediate ring are formed so as to bend in a same direction with respect to a circumferential direction of the tire.

4.  The airless tire according to claim 1 or 2, wherein the intermediate ring comprises a plurality of intermediate rings, and bent portions of two spokes adjacent in a circumferential direction of the tire and connected to a same intermediate ring are formed so as to bend in opposite directions with respect to the circumferential direction of the tire.

5. The airless tire according to any one of claims 1 to 4, wherein each of the spokes has a plurality of bent portions, and the bent portions each have a minor angle that is formed to decrease from the end portion on the wheel side to the end portion on the tread side.

6. The airless tire according to any one of claims 1 to 5, wherein the direction connecting the end portion on the wheel side and the end portion on the tread side in each of the spokes is provided to incline in a circumferential direction of the tire by a predetermined angle exceeding 0 with respect to a radial direction of the tire.

7. The airless tire according to any one of claims 1 to 6, wherein the spokes have a bending rigidity that is set to a value greater than that of the intermediate ring.

8. The airless tire according to any one of claims 1 to 7, wherein the intermediate ring comprises an even number of intermediate rings.

FIG. 1

FIG. 2A

FIG. 2B

FIG. 3

FIG. 4

FIG. 5

FIG. 6

Position of intermediate ring [deg] (ground contact center: 0)

*(Y-axis label)* Equivalent to tensile or compressive force [N] (+: tensile)

Labels within graph: Intermediate ring 134, Intermediate ring 135, Intermediate ring 131, Intermediate ring 132, Intermediate ring 133

FIG. 7

Vertical force share ratio [%] (+: upward) vs Angle [deg] (ground contact center: 0)

FIG. 8A

FIG. 8B

FIG. 9

FIG. 10

FIG. 11

FIG. 12

FIG. 13

FIG. 14

FIG. 15

FIG. 16

## INTERNATIONAL SEARCH REPORT

| International application No. |
| --- |
| **PCT/JP2022/014629** |

| A. | CLASSIFICATION OF SUBJECT MATTER |
| --- | --- |

**B60C 7/00**(2006.01)i
FI:   B60C7/00 H

According to International Patent Classification (IPC) or to both national classification and IPC

| B. | FIELDS SEARCHED |
| --- | --- |

Minimum documentation searched (classification system followed by classification symbols)

B60C1/00-19/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 3-208702 A (COMPAGNIE GENERALE DES ETABLISSEMENTS MICHELIN-MICHELIN & CIE) 11 September 1991 (1991-09-11) | 1-3, 5, 7-8 |
| | claims, fig. 9 | |
| Y | | 6 |
| X | JP 2019-518639 A (LANXESS SOLUTION US INC) 04 July 2019 (2019-07-04) | 1, 4, 7 |
| | claims, fig. 1 | |
| Y | | 6 |
| Y | JP 2015-113079 A (TOYO TIRE & RUBBER CO) 22 June 2015 (2015-06-22) | 6 |
| | fig. 5 | |
| Y | JP 2014-118116 A (TOYO TIRE & RUBBER CO) 30 June 2014 (2014-06-30) | 6 |
| | fig. 6 | |
| Y | JP 1-311902 A (YOKOHAMA RUBBER CO LTD) 15 December 1989 (1989-12-15) | 6 |
| | fig. 5 | |

| ✓ Further documents are listed in the continuation of Box C. | ✓ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **27 April 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 501 662 A1**

<table>
<tr><th colspan="2">INTERNATIONAL SEARCH REPORT</th><th>International application No.</th></tr>
<tr><td colspan="2"></td><td>**PCT/JP2022/014629**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | JP 2012-62045 A (HANKOOK TIRE CO LTD) 29 March 2012 (2012-03-29)<br>entire text | 1-8 |

Form PCT/ISA/210 (second sheet) (January 2015)

INTERNATIONAL SEARCH REPORT

Information on patent family members

International application No.

**PCT/JP2022/014629**

| Patent document cited in search report | | | Publication date (day/month/year) | Patent family member(s) | | | Publication date (day/month/year) |
|---|---|---|---|---|---|---|---|
| JP | 3-208702 | A | 11 September 1991 | US | 5042544 | A | |
| | | | | claims, fig. 9 | | | |
| | | | | EP | 420033 | A1 | |
| | | | | FR | 2652310 | A1 | |
| | | | | AT | 95116 | T | |
| | | | | CA | 2026501 | A | |
| | | | | ES | 2044359 | T | |
| JP | 2019-518639 | A | 04 July 2019 | US | 2017/0334245 | A1 | |
| | | | | claims, fig. 1 | | | |
| | | | | WO | 2017/200645 | A1 | |
| | | | | EP | 3310588 | A1 | |
| | | | | AU | 2017266840 | A | |
| | | | | CA | 2989339 | A | |
| | | | | CN | 107848335 | A | |
| | | | | MX | 2017017154 | A | |
| | | | | BR | 112018001013 | A | |
| JP | 2015-113079 | A | 22 June 2015 | (Family: none) | | | |
| JP | 2014-118116 | A | 30 June 2014 | (Family: none) | | | |
| JP | 1-311902 | A | 15 December 1989 | (Family: none) | | | |
| JP | 2012-62045 | A | 29 March 2012 | US | 2012/0060991 | A1 | |
| | | | | EP | 2428369 | A2 | |
| | | | | KR | 10-1043001 | B1 | |
| | | | | CN | 102398474 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009035050 A